# EUROPEAN PATENT SPECIFICATION

(11) **EP 4 658 550 B1**
(45) Date of publication and mention of the grant of the patent: **18.11.2026**
(21) Application number: 24702645.3
(22) Date of filing: 30.01.2024
(51) Int. Cl.: B62D 35/00, B60J 11/06, B62D 35/02

(54) **PROTECTION SHIELD FOR THE FRONT WING OF PASSENGER CARS**
SCHUTZSCHILD FÜR DEN VORDEREN SPLITTER VON PERSONENKRAFTWAGEN
BOUCLIER DE PROTECTION POUR L'AILE AVANT DES VOITURES

(30) Priority: 31.01.2023 IT 202300001506; 31.01.2023 IT 202300001518
(43) Date of publication of application: 10.12.2025
(73) Proprietor: Waldner, Alessio, 60035 Jesi (AN) (IT)
(72) Inventor: Waldner, Alessio, 60035 Jesi (AN) (IT)
(74) Representative: Baldi, Claudio
(86) International application number: PCT/IB2024/050830
(87) International publication number: WO 2024/161296

(56) References cited:
- EP-B1- 0 709 280
- DE-A1- 102016 120 923
- US-A1- 2021 155 298
- US-B1- 10 214 255

## Description

The present patent application for industrial invention relates to a protective shield suitable for being removably applied to the splitter of high-performance cars.

As it is well known, many models of high-performance cars are anteriorly provided with a wing profile (commonly referred to as a "splitter") mounted under the front part of the car in order to increase the aerodynamic load and provide a better roadholding and directionality to the car.

Otherwise said, such wing profiles are considered as part of an "aerodynamic package", which is typical of high-performance cars, normally comprising a rear wing and side skirts, and which requires a reduced ground clearance.

While the latter condition - i.e. the reduced ground clearance of the car - provides significant aerodynamic advantages, it also entails serious risks to the safety of the aerodynamic appendages that operate at the height of the bottom of the car, and especially of said splitter.

In particular, the splitter may be severely damaged during the normal circulation of the car due to the inevitable unevenness of the road surface that often causes an impact of the splitter with the asphalt.

Needless to say, such an inconvenience is more frequent when a car equipped with a splitter with reduced ground clearance is driven on particularly steep ramps (of the type found in multi-floor parking lots) or over speed bumps, in a condition in which the possible damage is also favored by the fact that the aforementioned front wing profiles are often mounted in a considerably projecting position with respect to the front part of the car.

Moreover, the experience has shown that the aforementioned damage occurs not only to the lower surface of the splitter, which is rapidly damaged, but also to the entire perimeter edge of the aerodynamic appendage, which also tends to suffer from the high-speed impact of stones or debris possibly raised by the cars in front.

US2021255298A1 discloses a vehicle accessory made of aluminum composite material having the main purpose of increasing the dynamic performance of the vehicle without impairing the aesthetic appearance of the vehicle. The accessory comprises:
- a panel intended to be placed underneath the vehicle,
- variable-length tie rods for attaching a front portion of the panel to the front grille or to the front bumper of the vehicle; and
- screws, bolts, or rivets for attaching a rear portion of the panel to the bottom of the vehicle.

The accessory described in US2021255298A1 is not designed to protect the bottom of the car. In addition, the mounting operation of the accessory using the aforementioned tie rods, screws, bolts, and rivets is quite complex, slow, and laborious to perform, and therefore, it requires the professional service of an operator from an auto repair shop.

US10214255B1 discloses a panel intended to be mounted on the bottom of a car in a front position with the function of reducing the aerodynamic drag of the vehicle. The panel has a front portion and a rear portion. The front portion has a curved front edge that terminates at the top with a vertical fin having holes intended to be pierced by screws or bolts that attach the vertical fin to the front grille or to the bumper of the car. The curved front edge is shaped in such a way that the front portion of the panel can bend around a horizontal centerline of the curved front edge when the front portion of the panel goes in contact with obstacles. On the other hand, the rear portion of the panel has holes suitable for accommodating vertical screws and bolts designed to secure the rear portion of the panel to the bottom of the car.

The panel described in US10214255B1 is somewhat complex, slow and laborious to assemble because of the presence of screws or bolts, and therefore, it requires the professional service of an operator from an auto repair shop.

EP0709280B1 describes a front-end spoiler that can reduce the aerodynamic drag and the lifting force acting on the front wheels of a car. The splitter has an under cover in the form of a semicircular plate in which there is a plurality of brackets that are attached to the bottom of the car by means of screws. Also in such a case, the assembly of the spoiler is extremely complex, slow and laborious because of the presence of the screws.

The purpose of the present invention is to solve the problems of the prior art by devising a protective splitter shield that:
- can be quickly assembled and disassembled by the car owner without requiring the intervention of an operator from an auto repair shop; and
- does not require the use of bolts, rivets or screws for its assembly.

A further purpose of the present invention is to devise a shield that can efficiently and effectively protect the lower surface of the splitter.

Another purpose of the present invention is to devise a shield that can also efficiently and effectively protect the entire perimeter edge of the splitter.

The main purpose of the present invention is achieved in accordance with the invention with the features listed in the attached independent claim 1.

Advantageous achievements appear from the dependent claims.

The shield according to the invention is defined by claim 1.

For explanatory clarity, the description of the invention continues with reference to the attached drawings, which are for illustrative and non-limiting purposes only, wherein:
- Fig. 1 is a schematic axonometric view of a first embodiment of the shield according to the invention, which can be defined as a monolithic shield;
- Fig. 2 is similar to the previous figure, but shows different attachment means than those shown in Fig. 1;
- Figs. 3A to 3D show an alternative embodiment of the locking means provided in the shield shown in Fig. 1;
- Fig. 4 is a schematic axonometric view of a second embodiment of the shield according to the invention, which can be defined as a modular shield;
- Fig. 4A is similar to the previous figure, but shows different attachment means than those shown in Fig. 4;
- Fig. 5 is a schematic drawing showing a first embodiment of the means that ensure the connection between the two portions of the shield shown in Figs. 4 and 4A;
- Fig. 6 is a schematic drawing showing a second embodiment of the means that ensure the connection between the two portions of the shield shown in Figs. 4 and 4A;
- Fig. 7 is a schematic drawing showing a third embodiment of the means that ensure the connection between the two portions of the shield shown in Figs. 4 and 4A;
- Fig. 8 is a schematic drawing showing a fourth embodiment of the means that ensure the connection between the two portions of the shield shown in Figs. 4 and 4A;
- Fig. 9 is a schematic drawing showing a fifth embodiment of the means that ensure the connection between the two portions of the shield shown in Figs. 4 and 4A;
- Fig. 10 is a schematic side view of a car on which a shield is mounted according to the invention.

With reference to the attached figures, a protective shield according to the invention, which is indicated with the reference letter "S", is described.

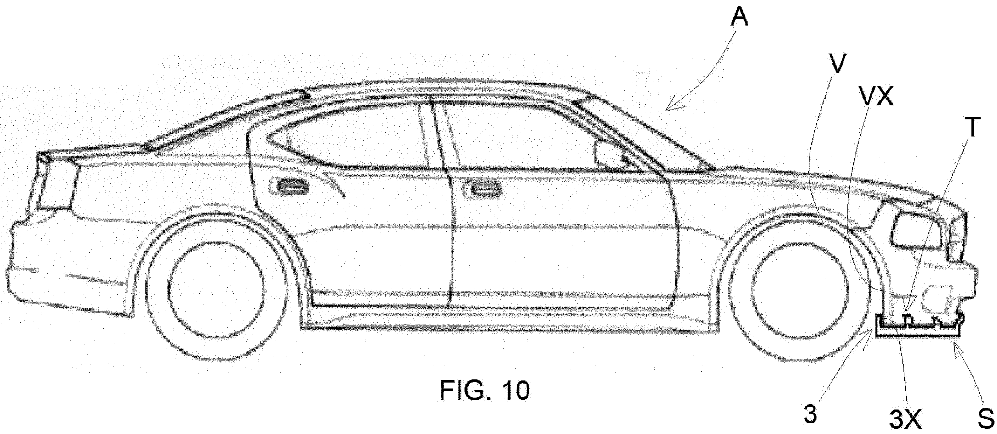

The protective shield (S) is suitable for being used to protect a front splitter (T) of a car (A) (as shown in Fig. 10).

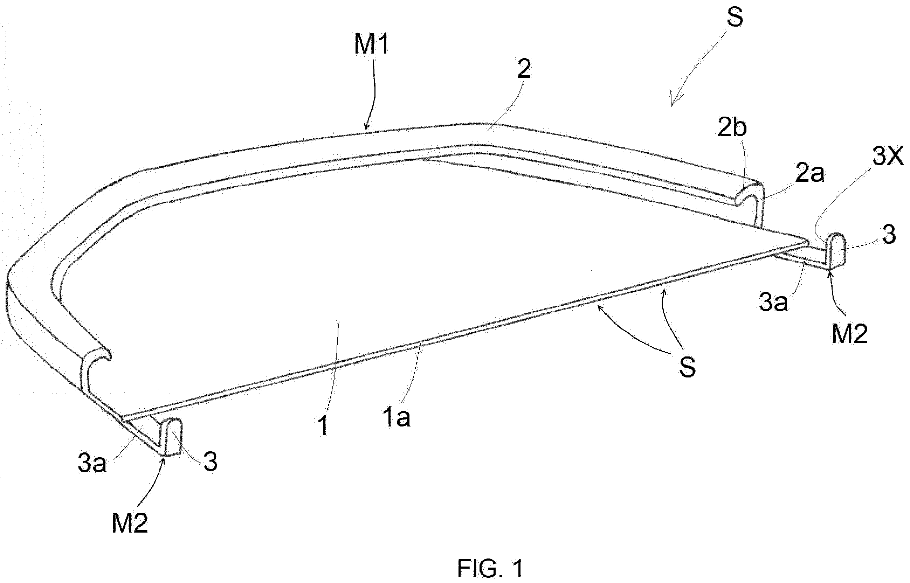

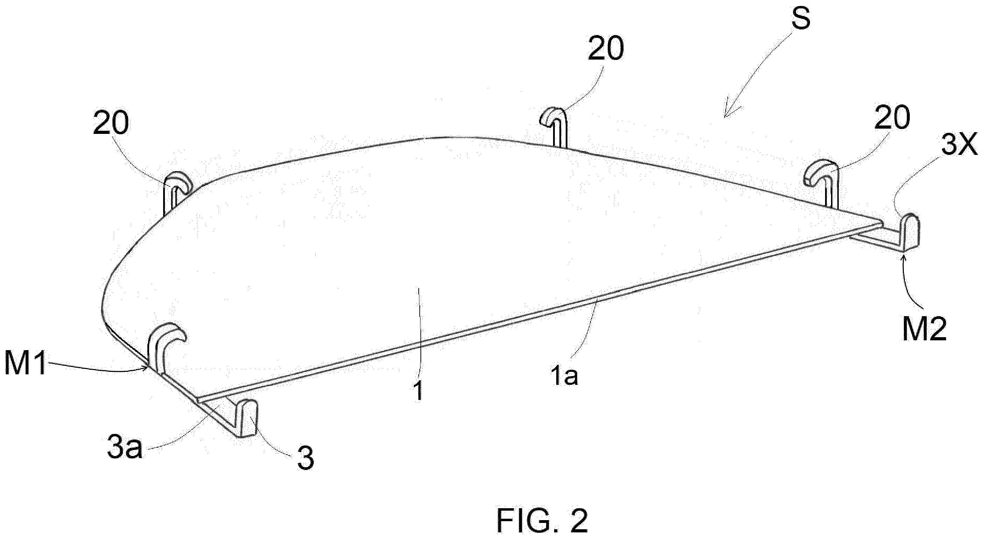

Referring to Figs. 1 and 2, the protective shield according to invention (S) comprises a panel (1) having a profile corresponding to that of the lower surface of a splitter mounted in the car. The panel (1) of the protective shield shown in Figs. 1 and 2 is a monolithic panel.

The panel (1) also has a rear edge (1a) suitable for facing the rear of the car (A).

The shield (S) is provided with attachment means (M1) configured in such a way as to attach the panel (1) to the splitter (T) of the car (A).

The shield (S) also comprising locking means (M2) arranged in the rear edge (1a) to hold said panel (1) in position attached to the splitter (T).

The attachment means (M1) comprise at least one hook (2, 20) suitably shaped to perfectly embrace and accommodate corresponding front and/or side edges of the splitter (T) of the car (A) in order to prevent the shield (S) from detaching from the splitter (T) according to a vertical direction.

On the other hand, the locking means (M2) comprise a pair of vertical projections (3, 30) suitable for being engaged and anchored in an undercut of the bottom of the car (A) or in one of the front wheel wells (V) of the car (A). With reference to Fig. 10, each vertical projection (3, 30) comprises a face (3X) directed towards the at least one hook (2, 20) of the attachment means (M1) and suitable for going in contact with and adhere against a front vertical surface of the undercut of the bottom of the car (A) or against a front surface (VX) of the wheel well (V) of the car in such a way as to prevent a forward sliding movement of the shield (S) relative to the splitter (T).

It can be otherwise said that the attachment means (M1), which comprise the at least one hook (2, 20), prevent the shield (S) from being fortuitously detached from the splitter (T) according to a vertical direction, whereas the locking means (M2), which comprise said two vertical projections (3, 30) engaged in the front wheel wells (V) of the car (A) or in undercuts of the bottom of the car (A), prevent any undesirable forward sliding movement of the splitter in horizontal/longitudinal direction in case of a violent impact with the road surface or merely as a result of a particularly powerful braking.

In the preferred embodiment shown in Fig. 1, the at least one hook (2, 20) of said attachment means (M1) is made in the form of a substantially tubular profile (2) extending along the front edge of the panel (1) and for a large part of the two side edges.

When viewed in section, starting from the bottom, said tubular profile (2) comprises a first curved section (2a), which is substantially vertical with concavity facing the center of said panel (1), connected at the top with a substantially horizontal second section (2b).

The function of such a tubular profile (2) is to exactly accommodate the corresponding front and side edges of the splitter (T), in such a way as to realize a perfect substantially tongue-and-groove coupling.

With this in mind, it can be understood how the tubular profile (2) not only serves as a means for the stable attachment of the entire shield (S) with respect to the splitter (T), but also ensures a perfect protection against shocks in favor of the front edge and of the side edges of the splitter (T). In addition, as an additional function, the tubular profile (2) protects the upper surface of the splitter (T) from any stones or debris raised by the cars that are travelling in front.

In order to increase the efficiency of the coupling of the edge of the splitter (T) in the tubular profile (2) of the shield (S), also from an aerodynamic point of view, said tubular profile (2) is provided in an advantageous position with a sealing gasket, which is not shown in the attached figures.

Instead, in the preferred embodiment shown in Fig. 1, it is provided that the vertical projections (3) of the locking means (M2) are substantially plate-like vertical projections that protrude upward from the ends of respective brackets (3a) projecting from the rear edge (1a) of the panel (1).

The function of such vertical projections (3) is to penetrate, from the bottom upward, inside the wheel wells (V) of the front wheels of the car (A) equipped with the splitter (T), so that they can be engaged and anchored against the vertical front surface (VX) of a respective wheel well (V).

It is easy to understand how the interference between the two vertical projections (3) and the respective wheel wells serves to hold the entire shield (S) in position, so as to totally neutralize any possible tendency to slide inadvertently in the horizontal direction with respect to the splitter (T).

It is also understood that, in order to give the maximum effectiveness to such a locking mode of the shield (S), the profile and the length of the brackets (3a), as well as the height and the profile of the respective vertical projections (3), must be designed in accordance with the structural characteristics of the car where the splitter (T) suitable for being attached to the shield (S) is to be mounted.

In order to facilitate the task of the person in charge of mounting said shield (S) on a respective splitter (T), it is preferably envisaged that the brackets (3a) supporting the two vertical projections (3) have an elastically deformable structure, in such a way that the user can rotate said brackets (3a) downward when the respective vertical projections (3) are to be inserted into the wheel wells (V) of the car (A); when the insertion of the vertical projections (3) into the wheel wells is completed and the deforming force applied to the brackets (3a) is ended, the brackets are brought back into their natural, perfectly horizontal position, against the bottom of the car.

According to an alternative, but conceptually akin solution, the vertical projections (3) may be capable of elastically bending with respect to the brackets (3a).

By taking advantage of such a bending ability, the user who is to install the shield according to invention (S) will first impart a rotation of about 90°, away from the rear edge (1a) of the panel (1) to the two vertical projections (3), so as to bring them into a substantially horizontal position, in alignment with the respective brackets (3a).

Once the entire shield (S) has been perfectly coupled with the respective splitter (T) and the two vertical projections (3), which are anchored in horizontal position, are brought to the height of the respective front wheel wells (V) of the car (A), the user will only have to eliminate the force used to keep the vertical projections (3) in the aforementioned horizontal position.

In view of the above, the inherent structural elasticity of said vertical projections (3) will cause them to "snap back" to their natural vertical position, in such a way as to advantageously interfere against the respective front wheel wells (V), thus operating as locking means. More specifically, when the vertical projections (3) are snapped back to their natural vertical position, they will have the face (3X) in adhesion against the front surface (VX) of the front wheel well (V).

The scope of the present invention also comprises an alternative embodiment with regard to said at least one hook (2, 20) of the attachment means (M1) suitable for preventing the detachment of the shield (S) from the respective splitter (T) according to a vertical direction.

Such attachment means are an alternative to the tubular profile (2), although they are not capable of protecting the front edge and the side edges of the respective splitter for their entire development.

With reference to Fig. 2, said alternative attachment means (M1) preferably consist of a plurality of hooks (20) projecting upwardly from the front edge and from the side edges of said panel (1) of the shield (S), wherein each one of said hooks (20) is preferably provided with a section shape similar to that of said tubular profile (2), thus being capable for embracing the front edge and the side edges of the splitter (T) in some isolated points.

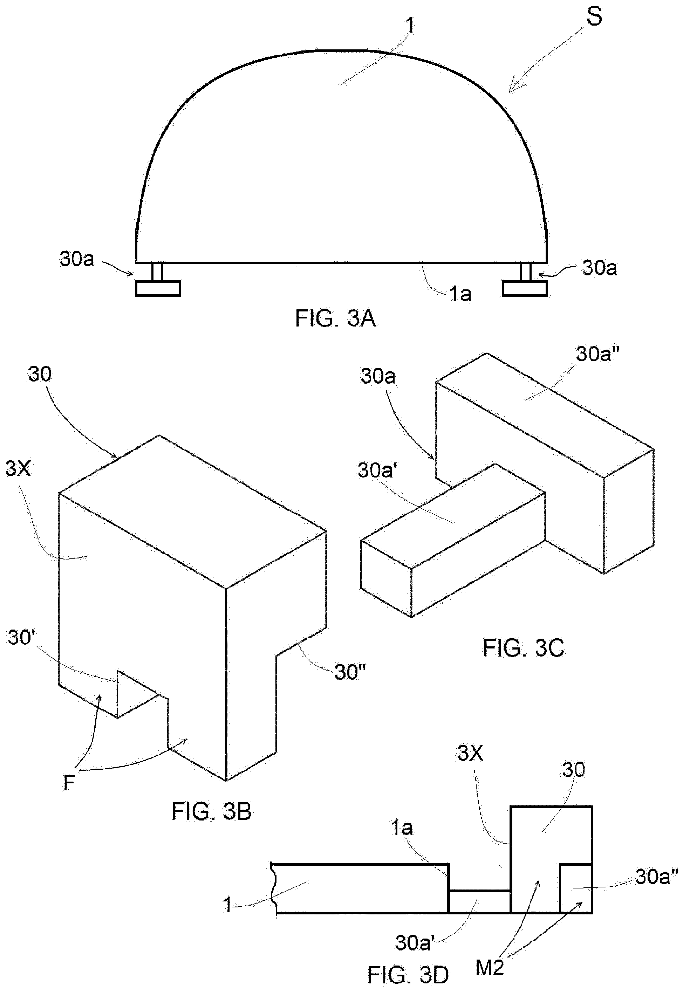

An alternative embodiment is also envisaged with reference to the locking means (M2) that are engaged in the wheel wells (V) of the car (A) to prevent a forward sliding movement of the shield (S) with respect to the splitter to be protected, as shown in Figs. 3A to 3D.

For the latter alternative embodiment of said locking means (M2), the shield (S) is provided at the rear edge (1a) of the panel (1) with a pair of projecting appendages (30a) having a substantially T-shaped profile.

In particular, each one of said appendages (30a) comprises a first section arranged edgeways (30a'), effectively connected with the rear edge (1a) of said panel (1) and a second section (30a") perpendicular to the first section and thus parallel to said rear edge (1a), as expressly shown in Fig. 3C.

Each one of these appendages (30a) is suitable for providing a removable coupling with the lower end of a dedicated vertical projection (30), which in such a case substantially consists of a suitably configured block with irregular shape, as expressly shown in Fig. 3B. Also in such a case, the vertical projection (30) is provided with the face (3X) suitable for interfering against a front surface (VX) of the front wheel well (V) or against a front surface of an undercut provided on the bottom of the car (A).

The lower end of said projection (30) is provided with a short longitudinal median notch (30') which originates a fork (F) having a thickness substantially equal to the space provided between the rear edge (1a) of the panel (1) of the shield (S) and the second section (30a") of each one of said T-shaped appendages (30a).

A step (30a") is provided posteriorly to said fork (F) of said projection (30), at a height substantially equal to that of the second section (30a") of each one of the T-shaped appendages (30a).

In view of the above, the coupling between the projection (30) and the respective T-shaped appendage (30a) is achieved by lowering the lower end of the projection (30) in the direction of the appendage (30a) through the space provided between the rear edge of the shield (S) and the second section (30a") of the T-shaped appendages (30a), as shown in Fig. 3D.

In such an occasion, a sliding of the first section (30a') of the T-shaped appendage (30a) inside said median notch (30') of the projection (30) is produced, in a condition in which such downward travel of the projection (30) is stopped at the moment when a double and simultaneous interference occurs: the interference of the first section (30a') of the T-shaped appendage (30a) against the top of the notch (30') of the projection (30) and the interference of the step (30") of the projection (30) against the second section (30a") of the T-shaped appendage (30a).

The use of such removable projections (30) facilitates the final attachment of the shield (S) to the car, in a condition in which the insertion of said projections (30) into the respective T-shaped appendages (30a) can be carried out after inserting the shield (S) into the respective splitter (T) and after moving the ends of the T-shaped appendages (30a) toward the center of the car, at the height of the two wheel wells (V).

While it has been so far assumed that the shield according to the invention (S) uses the pairs of projections (3, 30) suitable for being engaged inside the wheel wells of the car as locking means (M2), nothing prevents from using locking means (M2) that consist of one or more vertical projections located along the rear edge (1a) of the panel (1) of the shield (S), in the event that the car is provided at the bottom with undercuts wherein said vertical stop profiles may be engaged.

Otherwise said, said vertical projections (3, 30) may be suitable for being engaged into undercuts of the bottom of the car (A) in such a manner that the face (3X) of each vertical projection (3, 30) closely adheres in contact with a front surface of the undercut of the bottom of the car (A).

Hereafter, elements equal or corresponding to those already described are indicated with the same reference numerals, omitting a detailed description.

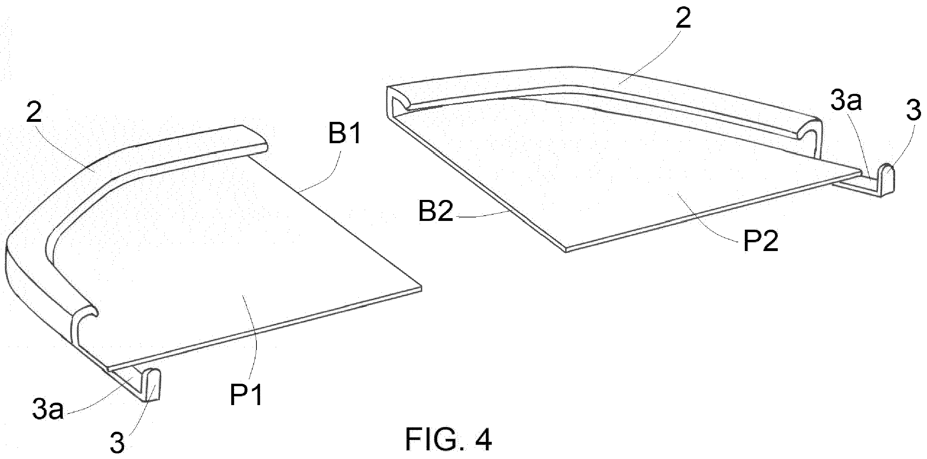

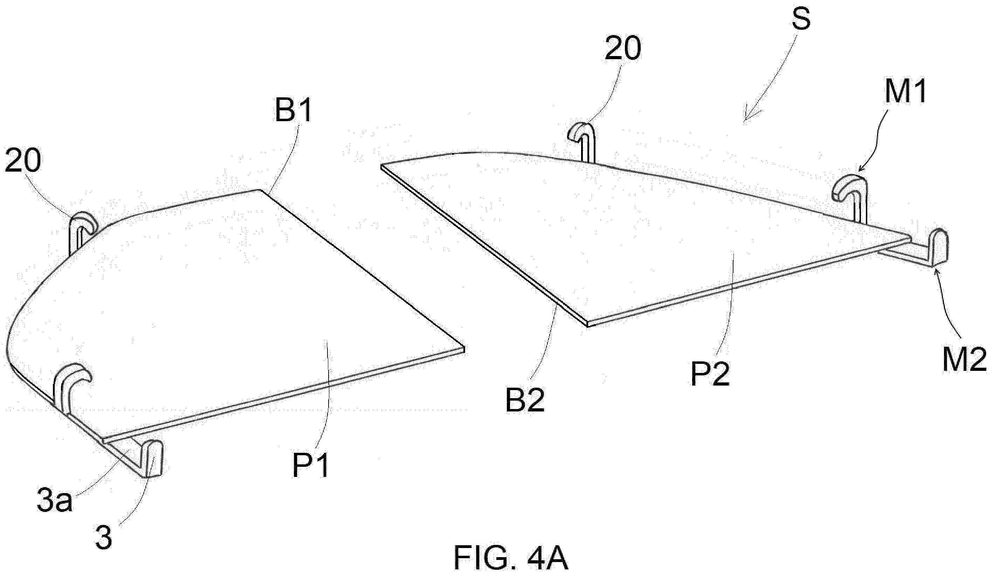

With reference to Figs. 4 to 9, a shield (S) according to a second embodiment of the invention definable as "modular" is illustrated.

The shield (S) shown in Figs. 4 to 9 has the same attachment means (M1) and the same locking means (M2) as the shield (S) shown in Figs. 1 to 3D, but differs from the shield (S) of Figs. 1 to 3D in that, instead of being monolithic, the panel (1) has a modular structure to facilitate the mounting of the shield (S) on the splitter (T), and also to make the shield (S) easier to handle when it is not used.

At this regard, in such a second embodiment of the invention, the shield (S) has two portions (P1, P2), each one preferably configurable as one of the two lateral halves of the shield (S) and suitably equipped with the attachment means (M1) and the locking means (M2), as shown in Figs. 4 and 4A. Particularly, in Figs. 4 and 4A, the locking means consist of said vertical projections (3) that protrude from the brackets (3a).

In view of the above, the user of said shield (S) can successively mount the first one and the second one of said portions (P1, P2) on the splitter (T), inserting said portions (P1, P2) at the respective side edges of the splitter (T), and ensuring that the respective vertical projections (3) are fitted properly inside the two wheel wells (V) of the car (A) equipped with the splitter (T) to be protected.

At the end of such a double insertion, said portions (P1, P2) of the shield in question (S) are brought in contact with respect to an intermediate line of mutual interference.

In order to stabilize the coupling, said two portions (P1, P2) are provided at the height of the respective interfaced edges (B1, B2) with connecting means (M3), capable of ensuring a stable and perfect structural continuity to the entire surface of the panel (1) composed of the two portions (P1, P2).

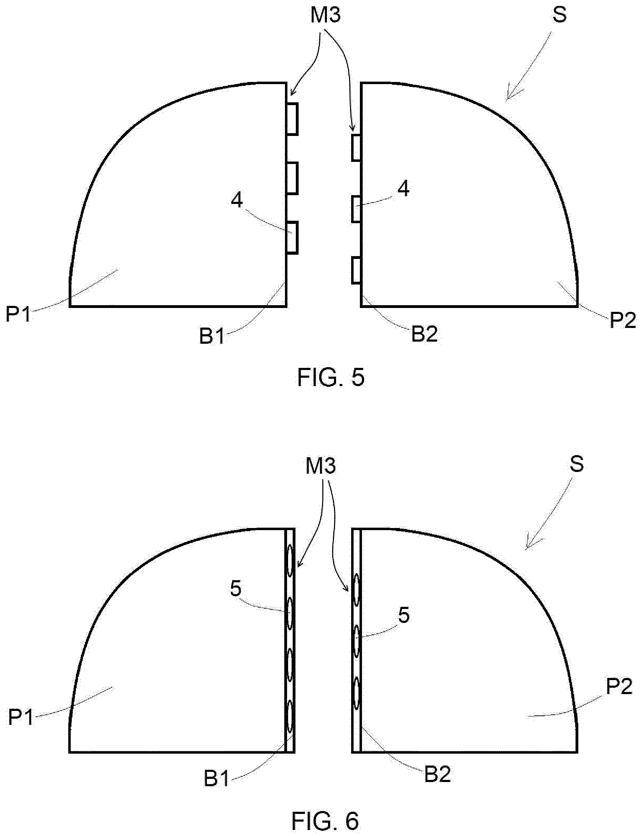

As shown in Fig. 5, according to a first constructive solution, said connecting means (M3) consist of sawtooth profiles (4) formed at the interfaced edges (B1, B2) of the two portions (P1, P2) of the panel (1), in a condition in which said sawtooth profiles (4) can be exactly and forcedly coupled with respect to each other.

As shown in Fig. 6, according to a second constructive solution, said connecting means (M3) consist of a set of small magnets (5) and of a corresponding set of metal plate respectively provided along the interfaced edges (B1, B2) of the two portions (P1, P2) of the panel (1), in a condition in which the magnets (5) exert a powerful magnetic attraction force towards the corresponding metal plates.

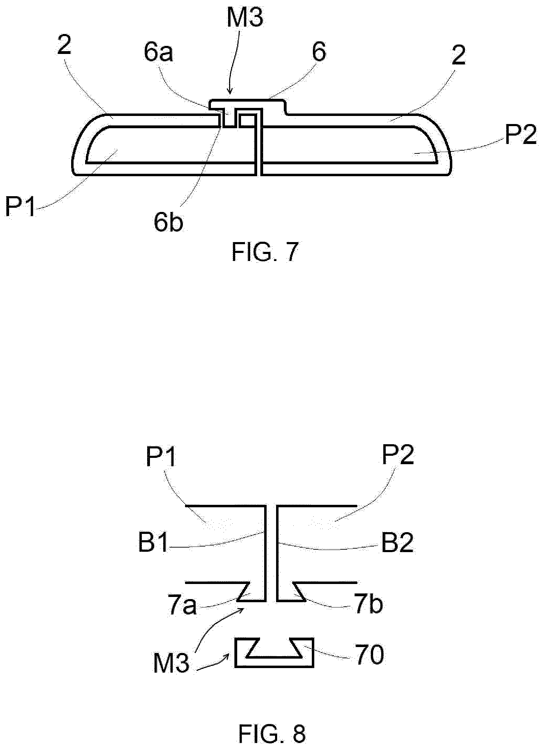

As shown in Fig. 7, according to a third constructive solution, said connecting means (M3) comprise a flexible tab (6) projecting from said tubular profile (2) of the second (P2) of said portions of the panel (1) in the direction of the first portion (P1).

Such a flexible tab (6) is inferiorly provided with a pin (6a) suitable for being forcedly engaged into a respective seat (6b) with vertical axis formed above the section of tubular profile (2) provided in the second portion (P2), once the interfaced edges (B1, B2) of the two portions are brought in mutual contact.

As shown in Fig. 8, according to a fourth construction solution, said connecting means (M3) comprise two longitudinal ribs (7a, 7b) formed inferiorly to the interfaced edges (B1, B2) of the two portions (P1, P2) of the panel (1); wherein, once the interfaced edges (B1, B2) are brought in contact, the ribs (7a, 7b) originate a single longitudinal rib with dovetail section.

A profile (70) with a corresponding section is exactly and slidingly inserted on the outside of the rib with dovetail section; as long as it remains in such an operating position, said profile (70) prevent the two respective edges (B1, B2) of the two portions (P1, P2) from accidentally losing their perfect and stable contact.

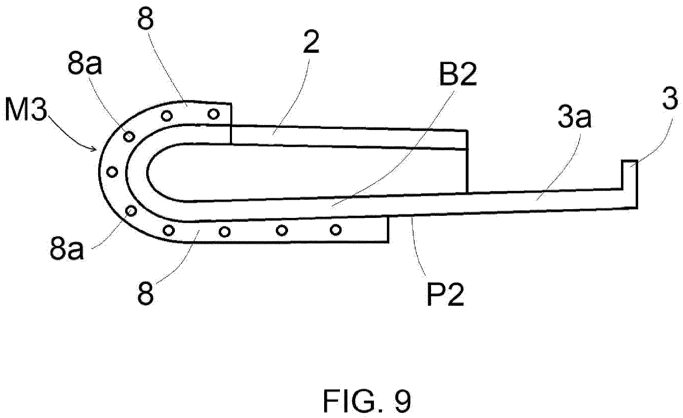

As shown in Fig. 9, according to a fifth constructive solution, said connecting means (M3) comprise two identical edges (8) projecting outside the two portions (P1, P2) of the shield (S) at the interfaced edges (B1, B2) of said portions (P1, P2); said edges (8) being provided with preferably equidistant holes (8a).

Once the interfaced edges (B1, B2) of the portions (P1, P2) are brought in mutual contact, also the respective edges (8) are arranged in perfect contact, with the further consequence of generating the perfect alignment of the holes (8a) drilled on the two edges (8).

At this point, the installer of such a modular shield (S) simply needs to insert a set of bolts into the pairs of holes (8a), which are now interfaced and aligned, and to fix respective tightening nuts.

Fig. 9 shows the edge (8) in the form provided for the version of the shield (S) shown in Fig. 4, that is, in the version equipped with the tubular profile (2).

As shown in such a drawing, said edge (8) does not only extend below the panel (1), but also circumscribes the respective section of the tubular profile (2).

It is understood that an edge (8) similarly equipped with holes (8a), may also be provided with reference to the version of the shield (S) shown in Fig. 4A, i.e. in the version without the tubular profile (2), in a condition in which such an edge (8) can inevitably extend only below the panel (1).

As described above, the "modular" embodiment introduces the possibility of realizing the shield (S) in more than a single piece, but this does not limit the number of parts, such as a three-part realization, which, however, is always provided with the connecting means (M3) described in Figs. 5 to 9, the attachment means (M1) and the locking means (M2).

The panel (1) of monolithic or modular type can be made of plastic materials, metal materials, composite materials, or other materials suitable for use.

After the above description, therefore, the advantages brought by the present invention now appear obvious.

Indeed, the coupling between the shield (S) in question and the respective splitter (T) is extremely fast and easy to make because of the provision of the attachment means (M1), consisting of a single tubular profile (2) that acts as a hook or of a plurality of hooks (20), and of the locking means (M2), consisting of vertical projections (3, 30) suitable for being engaged in undercuts of the bottom of the car (A) or in the front wheel wells (V) of the car (A).

Moreover, the shield (S) can be coupled to the splitter (T) without the use of screws, bolts and threaded parts to connect the shield (S) to the car. So, the shield (S) can be installed by the owner of the car (A) without having to go to an auto repair shop.

In this way, the shield (S) in question can be mounted to protect a splitter (T) when the car (A) is driven on roads that are likely to generate a risk for the splitter (T), and can be removed whenever the car (A) is driven on highways or in any case on roads with a smooth surface without significant surface irregularities.

Additionally, the shield (S) according to the invention is capable of perfectly protecting the entire lower surface of the splitter (T), in a condition in which any impacts with the ground would only affect the integrity of the shield (S), without damaging the splitter (T).

Furthermore, in the case where the attachment means (M1) comprise the single tubular profile (2), the shield (S) is capable of protecting the entire perimeter edge of the splitter.

Numerous variations and modifications of detail may be made to the present embodiment of the invention, which are within the reach of a person skilled in the art, and still within the scope of the invention as expressed by the appended claims.

## Claims

1. Protective shield (S) for car splitters, comprising:
- a panel (1) suitably configured to shield the lower horizontal surface of a respective splitter (T) of a car (A), as well as provided with a rear edge (1a);
- attachment means (M1) for attaching said panel (1) to the splitter above; and
- locking means (M2) arranged in the rear edge (1a) of the panel (1) to keep said panel (1) in position attached to the splitter (T)
**characterized in that**
the attachment means (M1) comprise at least one hook (2, 20) that is suitably shaped to exactly embrace and accommodate correspondent front and/or side edges of the splitter (T) of the car (A) in such a manner to prevent the detachment of the shield (S) from the splitter (T);
the locking means (M2) comprise a pair of vertical projections (3, 30) suitably configured for being engaged and anchored in undercuts of the bottom of the car (A) or in the front wheel wells (V) of the car (A); wherein each vertical projection (3, 30) comprises a face (3X) directed towards the at least one hook (2, 20) of the attachment means (M1) and suitable for going in contact against a front surface of the undercut of the bottom of the car (A) or against a front surface (VX) of the wheel well (V) in such a manner as to prevent a forward sliding movement of the shield (S) relative to the splitter (T).

2. The protective shield (S) according to claim 1, wherein said at least one hook (2, 20) comprises a substantially tubular profile (2) extending along the front edge and the side edges of said panel (1), wherein said tubular profile (2) is configured to accommodate the front edge and the side edges of the respective splitter (T).

3. The protective shield (S) according to claim 2, wherein said tubular profile (2) is provided with a sealing gasket suitable for being interposed between said tubular profile (2) and the respective splitter (T).

4. The protective shield (S) according to claim 1, wherein said at least one hook (2, 20) comprises a plurality of hooks (20) provided at the front edge and at the side edges of said panel (1), as well as suitable for being attached to the front edge and to the side edges of the respective splitter (T).

5. The protective shield (S) according to any of the preceding claims, wherein the pair of vertical projections (3) are supported at the ends of respective brackets (3a) protruding from said rear edge (1a) of the panel (1).

6. The protective shield (S) according to any of claims 1 to 4, wherein the pair of vertical projections (30) are suitable for being removably coupled to the ends of respective appendages (30a) protruding from said rear edge (1a) of the panel (1).

7. The protective shield (S) according to claim 6, wherein:
- each one of said appendages (30a) has a substantially T-shaped profile, comprising a first section disposed edgeways (30a') which projects from said rear edge (1a) of the panel (1), and a second section (30a') perpendicular to the first section and thus parallel to the rear edge (1a) of the panel (1);
- each one of said projections (30) substantially consists in a block with irregular shape; wherein said projection (30) is provided at its lower end with a longitudinal median notch (30') suitable for accommodating said first section (30a') of the T-shaped appendage (30a) during use; said projection (30) being also provided with a step (30") suitable for being disposed above said second section of each one of the T-shaped appendages (30a) during use.

8. The protective shield (S) according to any of the preceding claims, wherein said panel (1) comprises two modular portions (P1, P2) with interfaced edges (B1, B2) comprising connecting means (M3), each of said portions (P1, P2) being suitably configured to shield one side of said splitter.

9. The protective shield (S) according to claim 8, wherein said connecting means (M3) of said two portions (P1, P2) of the panel (1) consist in mutually conjugated sawtooth profiles (4) provided at the interfaced edges (B1, B2) of said portions (P1, P2).

10. The protective shield (S) according to claim 8, wherein said connecting means (M3) of said two portions (P1, P2) of the panel (1) consist in a set of small magnets (5) and in a corresponding set of metal plates respectively provided along said interfaced edges (B1, B2) of said portions (P1, P2).

11. The protective shield (S) according to claim 8 when dependent on claim 2, wherein said connecting means (M3) of said two portions (P1, P2) of panel (1) consist in:
- a flexible tab (6) projecting from said tubular profile (2) of the second (P2) of said portions of the panel (1) in the direction of the first portion (P1); wherein said tab (6) is inferiorly provided with a pin (6a);
- a seat (6b) formed above the section of tubular profile (2) provided in the second portion (P2), in such a way to exactly accommodate said pin (6a) provided in the tab (6), once said interfaced edges (B1, B2) of the first (P1) and of the second (P2) portion of the panel (1) are in mutual contact.

12. The protective shield (S) according to claim 8, wherein said connecting means (M3) of said two portions (P1, P2) of the panel (1) comprise:
- two longitudinal ribs (7a, 7b) formed inferiorly to said interfaced edges (B1, B2) of said two portions (P1, P2) of the panel (1); wherein, once said interfaced edges (B1, B2) are brought in mutual contact, said ribs (7a, 7b) originate a single longitudinal rib with dovetail section;
- a profile (70) suitable for being exactly and slidingly inserted on the outside of said longitudinal rib with dovetail section.

13. The protective shield (S) according to claim 8, wherein said connecting means (M3) of said two portions (P1, P2) of the panel (1) comprise two identical edges (8) projecting on the outside of said portions (P1, P2) at the respective interfaced edges (B1, B2); wherein said edges (8), which are suitable for being interfaced, are provided with respective and corresponding sets of holes (8a) suitably configured to accommodate fixing bolts.

## Patentansprüche

1. Schutzschild (S) für Frontflügel von Personenkraftwagen, umfassend:
- eine Platte (1), die so gestaltet ist, dass sie die untere horizontale Oberfläche eines jeweiligen Frontflügels (T) eines Personenkraftwagens (A) abschirmt, und die mit einer hinteren Kante (1a) versehen ist;
- erste Kopplungsmittel (M1) zum Koppeln der Platte (1) am darüber liegenden Frontflügel (T); und
- Anschlagmittel (M2), die an der hinteren Kante (1a) der Platte (1) angeordnet sind, um die besagte, am Frontflügel (T) angekoppelte Platte (1) in Position zu halten;
**dadurch gekennzeichnet, dass**
die Kopplungsmittel (M1) mindestens einen Haken (2, 20) umfassen, der eine derartige Form aufweist, dass er die entsprechenden vorderen und/oder seitlichen Kanten des Frontflügels (T) des Personenkraftwagens (A) umschließt und perfekt aufnimmt, so dass verhindert wird, dass der Schutzschild (S) sich von dem Frontflügel (T) löst;
die Kopplungsmittel (M1) umfassen ein Paar von vertikalen Vorsprüngen (3, 30), die dazu geeignet sind, sich in die Hinterschneidungen des Bodens des Personenkraftwagens (A) oder in die vorderen Radkästen (V) des Personenkraftwagens (A) einzugreifen und sich darin zu verankern; wobei jeder vertikale Vorsprung (3, 30) eine Anschlagseite (3X) umfasst, die dem mindestens einen Haken (2, 20) der Kopplungsmittel (M1) zugewandt ist und dazu bestimmt ist, gegen eine vordere Oberfläche der Hinterschneidung des Bodens des Personenkraftwagens (A) oder gegen eine vordere Oberfläche (VX) des Radkastens (V) anzuschlagen, so dass ein Nachvorngleiten des Schutzschildes (S) in Bezug auf den Frontflügel (T) verhindert wird.

2. Schutzschild (S) nach Anspruch 1, wobei der mindestens eine Haken (2, 20) im Wesentlichen aus einem Rohrprofil (2) besteht, das sich entlang der vorderen Kante und den seitlichen Kanten der besagten Platte (1) erstreckt, wobei das Rohrprofil (2) so gestaltet ist, dass es die vordere Kante und die seitlichen Kanten des jeweiligen Frontflügels (T) aufnehmen kann.

3. Schutzschild (S) nach Anspruch 2, wobei das Rohrprofil (2) mit einer Dichtung ausgestattet ist, die dazu geeignet ist, sich zwischen diesem und dem Frontflügel (T) anzuordnen.

4. Schutzschild (S) nach Anspruch 1, wobei der mindestens eine Haken (2, 20) eine Vielzahl von Haken (20) umfasst, die in Übereinstimmung mit der vorderen Kante und den seitlichen Kanten der besagten Platte (1) bereitgestellt sind und dazu bestimmt sind, sich an die vordere Kante und an die seitlichen Kanten des jeweiligen Frontflügels (T) anzukoppeln.

5. Schutzschild (S) nach einem der vorstehenden Ansprüche, wobei das Paar von vertikalen Vorsprüngen (3) an den Enden jeweiliger Konsolen (3a) gestützt werden, die an der besagten hinteren Kante (1a) der Platte (1) überstehen.

6. Schutzschild (S) nach einem der Ansprüche 1 bis 4, wobei das Paar von vertikalen Vorsprüngen (30) dazu geeignet ist, abnehmbar mit dem Ende jeweiliger Fortsätze (30a) gekoppelt zu werden, die aus der besagten hinteren Kante (1a) der Platte (1) überstehen.

7. Schutzschild (S) nach Anspruch 6, wobei:
- jeder der besagten Fortsätze (30a) ein im Wesentlichen T-förmiges Profil aufweist, umfassend einen ersten, hochkant angeordneten Arm (30a'), der aus der besagten hinteren Kante (1a) der Platte (1) vorsteht, und einen zweiten Arm (30a''), der senkrecht zum ersten und folglich parallel zur hinteren Kante (1a) der Platte (1) angeordnet ist;
- jeder der besagten Vorsprünge (30) besteht im Wesentlichen aus einem unregelmäßig geformten Block; wobei der Vorsprung (30) in Übereinstimmung mit seinem unteren Ende einen mittleren, längslaufenden Einschnitt (30') aufweist, der dazu geeignet ist, den besagten ersten Arm (30a') des T-förmigen Fortsatzes (30a) bei Gebrauch aufzunehmen; wobei der Vorsprung (30) des Weiteren eine Stufe (30") aufweist, die dazu geeignet ist, bei Gebrauch oberhalb des besagten zweiten Arms eines jeden T-förmigen Fortsatzes (30a) zur Anlage zu kommen.

8. Schutzschild (S) nach einem der vorstehenden Ansprüche, wobei die Platte (1) zwei zusammenbaubare Abschnitte (P1, P2) umfasst, die koppelbare Kanten (B1, B2) aufweisen, die Verbindungsmittel (M3) umfassen, wobei jeder der Abschnitte (P1, P2) so gestaltet ist, dass er eine Seite des besagten Frontflügels abschirmt.

9. Schutzschild (S) nach Anspruch 8, wobei die besagten Verbindungsmittel (M3) der beiden besagten Abschnitte (P1, P2) der Platte (1) aus miteinander verbindbaren Sägezahnprofilen (4) bestehen, die in Übereinstimmung mit den koppelbaren Kanten (B1, B2) der Abschnitte (P1, P2) bereitgestellt sind.

10. Schutzschild (S) nach Anspruch 8, wobei die besagten Verbindungsmittel (M3) der beiden besagten Abschnitte (P1, P2) der Platte (1) aus einer Reihe von kleinen Magneten (5) und aus einer entsprechenden Reihe von Metallplättchen bestehen, die jeweils entlang der besagten koppelbaren Kanten (B1, B2) der Abschnitte (P1, P2) bereitgestellt sind.

11. Schutzschild (S) nach Anspruch 8, wenn abhängig von Anspruch 2, wobei die besagten Verbindungsmittel (M3) der beiden besagten Abschnitte (P1, P2) der Platte (1) aus Folgendem bestehen:
- einem flexiblen Steg (6), der aus dem besagten Rohrprofil (2) des zweiten (P2) der besagten Abschnitte der Platte (1) in Richtung des ersten Abschnitts (P1) vorsteht; wobei der Steg (6) unterseitig einen Dorn (6a) aufweist;
- einen Sitz (6b), der oberhalb des im zweiten Abschnitt (P2) bereitgestellten Stücks des Rohrprofils (2) realisiert ist, um den in der Lasche (6) bereitgestellten besagten Dorn (6a) exakt aufzunehmen, wenn die besagten koppelbaren Kanten (B1, B2) des ersten (P1) und des zweiten (P2) Abschnitts der Platte (1) in gegenseitigem Anschlag sind.

12. Schutzschild (S) nach Anspruch 8, wobei die besagten Verbindungsmittel (M3) der beiden besagten Abschnitte (P1, P2) der Platte (1) Folgendes umfassen:
- zwei Längsrippen (7a, 7b), die unterhalb der besagten koppelbaren Kanten (B1, B2) der beiden besagten Abschnitte (P1, P2) der Platte (1) realisiert sind; wobei die Rippen (7a, 7b), wenn die besagten koppelbaren Kanten (B1, B2) in Anschlag gebracht sind, eine einzige Längsrippe mit einem schwalbenschwanzförmigen Querschnitt bilden;
- ein Profil (70), das dazu geeignet ist, auf das Äußere der schwalbenschwanzförmigen Längsrippe exakt gleitend aufgeschoben zu werden.

13. Schutzschild (S) nach Anspruch 8, wobei die besagten Verbindungsmittel (M3) der beiden besagten Abschnitte (P1, P2) der Platte (1) zwei identische Kanten (8) umfassen, die aus den Abschnitten (P1, P2) in Übereinstimmung mit den koppelbaren Kanten (B1, B2) nach außen vorstehen; wobei die Kanten (8), die ihrerseits koppelbar sind, jeweilige entsprechende Reihen von Löchern (8a) aufweisen, die so ausgebildet sind, dass sie Befestigungsbolzen aufnehmen können.

## Revendications

1. Bouclier (S) protecteur pour splitters de véhicules, comprenant :
- un panneau (1) conformé pour protéger la surface horizontale inférieure d'un respectif splitter (T) d'un véhicule (A), ainsi que muni d'un bord postérieur (1a) ;
- des moyens d'accrochage (M1) pour accrocher le susdit panneau (1) au splitter (T) surjacent ; et
- des moyens de fixation (M2) disposés dans le bord postérieur (1a) du panneau (1) pour maintenir en position le susdit panneau (1) accroché au splitter (T) ;
**caractérisé en ce que**
les moyens d'accrochage (M1) comprennent au moins un crochet (2, 20) ayant une forme qui lui permet d'embrasser et d'accueillir parfaitement des bords frontaux et/ou latéraux correspondants du splitter (T) du véhicule (A) de façon à ce que le bouclier (S) ne puisse pas se détacher du splitter (T) ;
les moyens de fixation (M2) comprennent une paire de saillies verticales (3, 30) aptes à se loger et à s'ancrer dans les dépouilles du fond du véhicule (A) ou dans les passages de roues avant (V) du véhicule (A) ; où chaque saillie verticale (3, 30) comprend une face de butée (3X) qui est orientée vers l'au moins un crochet (2, 20) des moyens d'accrochage (M1) et qui est destinée à aller en butée contre une surface antérieure de la dépouille du fond du véhicule (A) ou contre une surface antérieure (VX) du passage de roue (V) de façon à empêcher le glissement en avant du bouclier (S) par rapport au splitter (T).

2. Bouclier (S) protecteur selon la revendication 1, où ledit au moins un crochet (2, 20) consiste en un profil pratiquement tubulaire (2) qui se déploie le long du bord frontal et des bords latéraux du susdit panneau (1), où ledit profil tubulaire (2) est façonné de manière à contenir le bord frontal et les bords latéraux du respectif splitter (T).

3. Bouclier (S) protecteur selon la revendication 2, où ledit profil tubulaire (2) est muni d'un joint d'étanchéité apte à s'interposer entre ledit bouclier et le respectif splitter (T).

4. Bouclier (S) protecteur selon la revendication 1, où ledit au moins un crochet (2, 20) comprend une pluralité de crochets (20) prévus en correspondance du bord frontal et des bords latéraux du susdit panneau (1), étant également aptes à s'accrocher au bord frontal et aux bords latéraux du respectif splitter (T).

5. Bouclier (S) protecteur selon l'une quelconque des revendications précédentes, où la paire de saillies verticales (3) sont soutenues aux extrémités par des respectifs supports (3a) qui débordent du susdit bord postérieur (1a) du panneau (1).

6. Bouclier (S) protecteur selon l'une quelconque des revendications de 1 à 4, où la paire de saillies verticales (30) sont aptes à être couplées de manière amovible à l'extrémité de respectives appendices (30a) qui débordent du susdit bord postérieur (1a) du panneau (1).

7. Bouclier (S) protecteur selon la revendication 6, où :
- chacune des susdites appendices (30a) présente un profil pratiquement en forme de « T », comprenant une première branche disposée sur chant (30a'), qui déborde du susdit bord postérieur (1a) du panneau (1), et une seconde branche (30a") perpendiculaire à la première et donc parallèle au bord postérieur (1a) du panneau (1) ;
- chacune des susdites saillies (30) consiste essentiellement en un petit bloc de forme irrégulière ; où ladite saillie (30) présente, en correspondance de son extrémité inférieure, une entaille médiane longitudinale (30') apte à loger pendant l'usage la susdite première branche (30a') de l'appendice en forme de « T » (30a) ; ladite saillie (30) présentant également un gradin (30") apte à aller en butée pendant l'usage au-dessus de la susdit deuxième branche de chacune des appendices en « T » (30a).

8. Bouclier (S) protecteur selon l'une quelconque des revendications précédentes, où ledit panneau (1) comprend deux portions modulaires (P1, P2) présentant des bords qui peuvent s'interfacer (B1, B2), munis de moyens de connexion (M3), étant chacune des susdites portions (P1, P2) façonnée pour protéger un côté du susdit splitter.

9. Bouclier (S) protecteur selon la revendication 8, où les susdits moyens de connexion (M3) des deux susdites portions (P1, P2) du panneau (1) consistent en profils en dents de scie (4), en mesure de se conjuguer réciproquement, prévus à hauteur des bords qui peuvent s'interfacer (B1, B2) des susdites portions (P1, P2).

10. Bouclier (S) protecteur selon la revendication 8, où les susdits moyens de connexion (M3) des deux susdites portions (P1, P2) du panneau (1) consistent en une série de petits aimants (5) et d'une correspondante série de plaquettes métalliques respectivement prévues le long des susdits bords qui peuvent s'interfacer (B1, B2) des susdites portions (P1, P2).

11. Bouclier (S) protecteur selon la revendication 8 quand dépendante de la revendication 2, où les susdits moyens de connexion (M3) des deux susdites portions (P1, P2) du panneau (1) consistent en :
- une ailette flexible (6) qui déborde du susdit profil tubulaire (2) de la seconde (P2) des susdites portions du panneau (1) en direction de la première portion (P1) ; où ladite ailette (6) présente inférieurement une goupille (6a) ;
- un emplacement (6b) réalisé au-dessus du segment de profil tubulaire (2) dont est dotée la seconde portion (P2), de façon à pouvoir accueillir exactement la susdite goupille (6a) dont est dotée la languette (6), lorsque les susdits bords qui peuvent s'interfacer (B1, B2) de la première (P1) et de la seconde (P2) portions du panneau (1) sont disposés en butée réciproque.

12. Bouclier (S) protecteur selon la revendication 8, où les susdits moyens de connexion (M3) des deux susdites portions (P1, P2) du panneau (1) comprennent :
- deux nervures longitudinales (7a, 7b) réalisées inférieurement aux susdits bords qui peuvent s'interfacer (B1, B2) des deux susdites portions (P1, P2) du panneau (1) ; où lesdites nervures (7a, 7b), lorsque les susdits bords qui peuvent s'interfacer (B1, B2) sont disposés en butée, donnent origine à une seule nervure longitudinale ayant une section en forme de queue d'hirondelle ;
- un profilé (70) apte à être enfilé exactement et de manière coulissante sur l'extérieur de la susdite nervure longitudinale en queue d'hirondelle.

13. Bouclier (S) protecteur selon la revendication 8, où les susdits moyens de connexion (M3) des deux susdites portions (P1, P2) du panneau (1) comprennent deux rebords identiques (8) qui débordent à l'extérieur des susdites portions (P1, P2) à hauteur des respectifs bords qui peuvent s'interfacer (B1, B2) ; où lesdits rebords (8), qui peuvent eux-aussi s'interfacer, présentent des respectives et correspondantes séries d'orifices (8a) façonnées de manière à pouvoir accueillir des boulons de fixation.
